# EUROPÄISCHE PATENTSCHRIFT

(11) **EP 1 399 655 B1**
(45) Veröffentlichungstag und Bekanntmachung des Hinweises auf die Patenterteilung: **24.10.2007**
(21) Anmeldenummer: 02754765.2
(22) Anmeldetag: 27.06.2002
(51) Int. Cl.: F01N 3/28

(54) **MANTELFÖRMIGES MITTELTEIL EINES KATALYSATORGEHÄUSES**
SHEATHED MID-SECTION OF A CATALYST HOUSING
ELEMENT CENTRAL EN FORME D'ENVELOPPE D'UN BOITIER CATALYTIQUE

(30) Priorität: 29.06.2001 DE 10131466
(43) Veröffentlichungstag der Anmeldung: 24.03.2004
(73) Patentinhaber: ThyssenKrupp Steel AG, 47166 Duisburg (DE); Volkswagen AG, 38436 Wolfsburg (DE)
(72) Erfinder: FLEHMIG, Thomas, 40885 Ratingen (DE); KIBBEN, Martin, 46537 Dinslaken (DE); FEDERWISCH, Jürgen, 57258 Freudenberg (DE); BEHNER, Attila, 34270 Schauenburg (DE); EMDE, Fred, 34134 Kassel (DE); NEURATH, Frank, 34305 Niedenstein (DE); REINTANZ, Rudi, 34302 Guxhagen (DE)
(74) Vertreter: Knauf, Rudolf
(86) Internationale Anmeldenummer: PCT/EP2002/007089
(87) Internationale Veröffentlichungsnummer: WO 2003/008773

(56) Entgegenhaltungen:
- EP-A- 0 818 615
- DE-A- 19 819 202
- DE-A- 19 846 900
- GB-A- 758 124
- US-A- 4 448 754
- US-A- 6 000 131
- PATENT ABSTRACTS OF JAPAN vol. 005, no. 116 (M-080), 25. Juli 1981 (1981-07-25) & JP 56 056721 A (SUMITOMO ELECTRIC IND LTD), 18. Mai 1981 (1981-05-18)

## Beschreibung

Die Erfindung betrifft ein aus einer Metallblechplatine bestehendes, mantelförmiges Mittelteil eines Katalysatorgehäuses,insbesondere für Abgasanlagen für Verbrennungsmotoren, das unter Zwischenlage einer Lage aus einem Ausgleichsmaterial einen katalytisch wirksames Material umfassenden Monolithen unter radialer Vorspannung umschließt, wobei die Randbereiche der zum mantelförmigen Mittelteil umgeformten Metallblechplatine einander überlappen und miteinander fest verbunden sind.

Derartige Mittelteile von Katalysatorgehäusen für Abgasanlagen von Verbrennungsmotoren, insbesondere in Kraftfahrzeugen, sind bekannt (EP 0 818 615 A2). Die Herstellung des Gehäuses geschieht in der Weise, daß die Metallblechplatine um den von einem Blähmaterial als Ausgleichsmaterial umgebenen Keramikmonolithen gewickelt wird, wobei ihre Randbereiche zur Überlappung gebracht werden. Dann wird die derart zum mantelförmigen Mittelteil umgeformte Metallblechplatine mittels Spannbändern radial fest auf den Keramik- oder Metallmonolithen gepreßt, so daß im radial vorgespannten Zustand die einander überlappenden Randbereiche miteinander verschweißt werden können. Anschließend werden zur Komplettierung des Katalysatorgehäuses an beiden Enden des mantelförmigen Mittelteils trichterförmige Endteile angeschweißt.

Es hat sich gezeigt, dass der Keramikmonolith bei der Fertigung hohen Belastungen im Bereich der einander überlappenden Randbereiche ausgesetzt wird, die zur Beschädigung oder Zerstörung des Monolithen führen können.

Zur Herstellung von Zylindern aus Metallschwamm ist es bekannt (JP 56 056 721 A), einen flachen Zuschnitt aus dem Metallschwamm um einen Innendorn rohrförmig mit einander überlappenden Rändern zu formen. Die einander überlappenden Ränder haben die volle Materialstärke des Zuschnittes. Durch radiales Zusammendrücken und Stauchen des so verformten Zuschnittes auf den Innendorn erhält man eine maßgenaue Hülse, bei der der Zuschnitt im Überlappungsbereich von seiner ursprünglichen doppelten Materialstärke auf einfache Materialstärke zusammengedrückt ist. Dadurch ergibt sich eine gute Verzahnung der einander überlappenden Randbereiche. Dieses bekannte Herstellungsverfahren von Hülsen aus Flachmaterial basiert darauf, dass das umzuformende Material als Schwamm radial kompressibel ist.

Der Erfindung liegt die Aufgabe zugrunde, ein mantelförmiges Mittelteil eines Katalysatorgehäuses der eingangs genannten Art zu schaffen, bei dem der Monolith im Bereich der überlappenden Randbereiche der Metallblechplatine nicht gefährlich hoch druckbelastet ist.

Diese Aufgabe wird erfindungsgemäß bei einem Mittelteil eines Katalysatorgehäuses der eingangs genannten Art dadurch gelöst, dass die Randbereiche des Mittelteils im Überlappungsbereich eine gegenüber der übrigen Metallblechplatine nach Art einer Feder-Nut-Passung oder unter Bildung von Stufen derart reduzierte Blechdicke haben und gegeneinander und senkrecht zur Außenseite bzw. Innenseite der Metallblechplatine in entgegengesetzte Richtung derart versetzt sind, dass die Außen- bzw. Innenseite der Randbereiche und der angrenzenden, in der Blechdicke nicht reduzierten Bereiche des Mittelteils in der jeweils gleichen Mantelebene liegen und in Umfangsrichtung Spiel zwischen den Kanten der Randbereiche und den gegenüberliegenden stufenförmigen Übergängen zwischen den Randbereichen und den in der Blechdicke nicht reduzierten Bereichen des Mittelteils vorhanden ist.

Bei der Erfindung tritt aufgrund der besonderen Gestaltung der einander überlappenden Randbereiche weder bei der Fertigung noch im Betrieb trotz der radialen Druckbelastung keine örtliche Spitzenbelastung des druckempfindlichen Monolithen auf, vielmehr ist er über seinen gesamten Umfang gleichmäßig belastet. Daraus resultiert, dass es zu weniger Ausfällen sowohl bei der Herstellung als auch im Betrieb kommt.

Das Spiel in Umfangsrichtung im Bereich der Stufen ermöglicht ein Verschieben der Randbereiche übereinander bei unveränderten Dickenverhältnissen im überlappenden Bereich der Randbereiche, so dass das Spiel im Idealfall bis auf Null reduziert wird und dann die Außen- und Innenseiten des Mittelteils auch im Überlappungsbereich lücken- und stufenlos ineinander übergehen. So lassen sich bei der Fertigung, insbesondere beim Umformen und Spannen des mantelförmigen Mittelteils um den Monolithen, der aufgrund von Fertigungstoleranzen verschiedene Umfangsmaße haben kann, eine einheitlich große Umfangsspannung ohne örtliche Druckspitzen von Überlappungen mit Dickensprung vermeiden.

Bei der Erfindung ist die Summe der reduzierten Blechdicken der beiden Randbereiche gleich der vollen Blechdicke. Vorzugsweise sind die Blechdicken der beiden Randbereiche jeweils auf die Hälfte der vollen Blechdicke der Metallblechplatine reduziert.

Die Bildung der Stufen in den Randbereichen lässt sich auf verschiedene Art und Weise realisieren: Zum einen durch Anschweißen dünnerer Randstreifen nach Art der Tailored-Blanks-Fertigung, durch Anwalzen der Randbereiche oder durch mechanische Abarbeitung.

Gegenstand der Erfindung ist ferner eine ebene Blechplatine mit an gegenüberliegenden Rändern gehaltenen Randstreifen, die unter Bildung von Stufen senkrecht zu den Platinenaußenseiten und in entgegengesetzte Richtung derart gegeneinander versetzt und in der Blechdicke derart reduziert sind, dass ihre Gesamtdicke gleich der der Blechplatine ist und ihre Außenseiten in der Ebene der Außenseiten der übrigen Blechplatine liegen, zur Verwendung als mantelförmiges Mittelteil eines Katalysatorgehäuses nach Anspruch 1.

Im folgenden wird die Erfindung anhand einer ein Ausführungsbeispiel darstellenden Zeichnung erläutert. Im einzelnen zeigen:
- Fig. 1: einen Mittelteil eines Katalysatorgehäuses mit eingeschlossenem Keramikmonolithen im Querschnitt vor dem Verspannen mit umschlingenden Spannbändern und
- Fig. 2: einen Ausschnitt gemäß X der Fig. 1 in vergrößerter Darstellung.

Aus einer ebenen Metallblechplatine ist ein mantelförmiges Mittelteil 1 mit einem Überlappungsbreich 2 um einen zylinderförmigen, katalytisch wirksames Material umfassenden Monolithen 3 in der Regel aus Keramik mit einer Zwischenlage 4 aus Ausgleichsmaterial als Ausgleichsmaterial geformt. Das Ausleichsmaterial hält bei unterschiedlicher Wärmeausdehnung von Monolith 3 und Mantelteil 1 den Monolithen fixiert. Das Mittelteil 1 weist zwei axial verlaufende Randbereiche 5, 6 auf, deren Blechdicke die Hälfte der üblichen Blechdicke der Platine beträgt. Sie sind höhenversetzt zueinander an dem nich dickenreduzierten mittleren Teil des mantelförmigen Mittelteils 1 gehalten. Vorzugsweise sind sie mittels Laser angeschweißt.

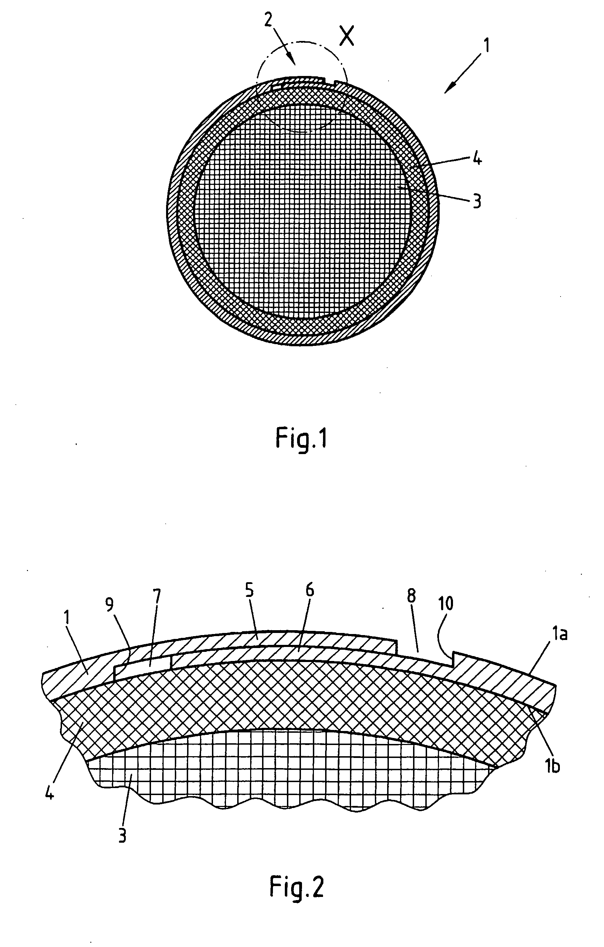

Wie vor allem Fig. 2 zeigt, liegt die Außenseite 1a des Randbreichs 5 in der äußeren Mantelebene 1a des Mittelteils 1, während die Innenseite des Randbereichs 6 in der inneren Mantelebene 1b des Mittelteils 1 liegt.

Neben der erfindungsgemäßen Besonderheit der über den Umfang des mantelförmigen Mittelteils 1 konstanten Blechdicke auch im Überlappungsbereich 2 besteht eine weitere Besonderheit darin, daß zwischen den Kanten der einander überlappenden Randbereiche 5, 6 und den von den Randbereichen 5, 6 und den angrenzenden in der Blechdicke voll ausgebildeten Bereichen des mantelförmigen Mittelteils 1 gebildeten stufenförmigen Übergängen 9, 10 Spiel 7, 8 vorhanden ist. Dieses Spiel 7, 8 ist vorgesehen, um beim Aufbringen einer Spannung mittels das Mittelteil 1 umschlingenden Spannbändern die Randbereiche 5, 6 gegeneinander verschieben zu können, ohne daß es zur Stauchung kommt. Nach einem solchen Spannen, durch das im Idealfall das Spiel 7, 8 auf Null reduziert wird, können die Randbereiche 5, 6 miteinander verschweißt werden.

## Patentansprüche

1. Aus einer Metallblechplatine bestehendes, mantelförmiges Mittelteil (1) eines Katalysatorgehäuses, insbesondere für Abgasanlagen von Verbrennungsmotoren, das unter Zwischenlage einer Lage (4) aus einem Ausgleichsmaterial einen katalytisch wirksames Material umfassenden Monolithen (3) unter radialer Vorspannung umschließt, wobei die Randbereiche (5,6) der zum mantelförmigen Mittelteil (1) umgeformten Metallblechplatine einander überlappen und miteinander fest verbunden sind,
**dadurch gekennzeichnet, dass** die Randbereiche (5,6) des Mittelteils (1) im Überlappungsbereich eine gegenüber der übrigen Metallblechplatine nach Art einer Feder-Nut-Passung oder unter Bildung von Stufen derart reduzierte Blechdicke haben und gegeneinander und senkrecht zur Außenseite (1a) bzw. Innenseite (1b) der Metallblechplatine in entgegengesetzte Richtung derart versetzt sind, dass die Außen- bzw. Innenseite (1a, 1b) der Randbereiche (5,6) und der angrenzenden, in der Blechdicke nicht reduzierten Bereiche des Mittelteils (1) in der jeweils gleichen Mantelebene liegen und in Umfangsrichtung Spiel (7, 8) zwischen den Kanten der Randbereiche (5, 6) und den gegenüberliegenden stufenförmigen Übergängen (9, 10) zwischen den Randbereichen (5, 6) und den in der Blechdicke nicht reduzierten Bereichen des Mittelteils vorhanden ist.

2. Mittelteil eines Katalysatorgehäuses nach Anspruch 1,
**dadurch gekennzeichnet, dass** die Blechdicken der beiden Randbereiche (5,6) auf die Hälfte der vollen Blechdicke der Metallblechplatine reduziert sind.

3. Mittelteil eines Katalysatorgehäuses nach Anspruch 1 oder 2,
**dadurch gekennzeichnet, dass** die Randbereiche (5,6) von angeschweißten Blechstreifen nach Art der Tailored-Blanks-Fertigung gebildet werden.

## Claims

1. A jacket-shaped middle part (1) of a catalytic converter housing, in particular for exhaust systems for internal combustion motors, which jacket-shaped middle part (1), incorporating an intermediate layer (4) made of an equalising material, encloses a monolith (3) which comprises a catalytically effective material under initial radial tension, wherein the marginal regions (5, 6) of the sheet metal plate, which has been formed to constitute the jacket-shaped middle part (1), mutually overlap and are firmly interconnected, **characterised in that** the marginal areas (5, 6) of the middle part (1) in the area of overlap is reduced in the manner of a tongue-and-groove fit or of forming steps to such an extent in relation to the remaining metal plate, and **in that** the marginal regions of the jacket-shaped middle part (1) are mutually and vertically offset in relation to the outside (1a) or inside (1b) of the sheet metal plate in opposite direction, that the outside (1a) or inside (1b) of the marginal regions (5, 6) and of the adjoining regions of the middle part (1) without reduction in sheet metal thickness are in the same respective jacket plane and a play (7, 8) is between the edges of the marginal regions (5, 6) and the opposite stepped transitions (9, 10) between the marginal regions (5, 6) and the regions where the sheet metal thickness has not been reduced.

2. The middle part of a catalytic converter housing according to claim 1, **characterised in that** the sheet metal thickness of the two marginal regions (5, 6) is reduced to half the full sheet metal thickness of the sheet metal plate.

3. The middle part of a catalytic converter housing according to claim 1 or 2,
**characterised in that** the marginal regions (5, 6) are formed by welded-on sheet metal strips in the manner of tailored-blanks production.

## Revendications

1. Elément central (1) en forme d'enveloppe, consistant en un disque de tôle métallique, d'un boîtier catalytique, en particulier pour installations de gaz d'échappement de moteurs à combustion, qui entoure sous tension initiale radiale, un monolithe (3) comprenant un matériau catalytiquement actif, sous la couche intermédiaire d'une couche (4) d'un matériau d'égalisation, où les zones de bord (5, 6) du disque de tôle métallique moulé en élément central (1) en forme d'enveloppe se chevauchent l'une l'autre et sont reliées solidement l'une avec l'autre,
**caractérisé en ce que** les zones de bord (5, 6) de l'élément central (1) ont au niveau du chevauchement, une épaisseur de tôle réduite par rapport au disque de tôle métallique du type d'un emboîtement mâle-femelle ou par formation de degrés et sont déportées l'une par rapport à l'autre et perpendiculairement à la face extérieure (1a) et respectivement, face intérieure (1b) du disque de tôle métallique en direction opposée, de sorte que les faces externe et respectivement, interne (la, 1b) des zones de bord (5, 6) et les zones voisines, d'épaisseur non réduite de l'élément central (1) se trouvent chaque fois dans le même plan de l'enveloppe et en direction de la périphérie, et qu'un jeu (7, 8) est présent entre les bords des zones de bord (5, 6) et les transitions (9, 10) en degrés opposées entre les zones de bord (5, 6) et les zones d'épaisseur non réduite de l'élément central.

2. Elément central d'un boîtier de catalyseur selon la revendication 1, **caractérisé en ce que** les épaisseurs de tôle des deux zones de bord (5, 6) sont réduites à la moitié de l'épaisseur complète de tôle du disque de tôle métallique.

3. Elément central d'un boîtier de catalyseur selon la revendication 1 ou 2, **caractérisé en ce que** les zones de bord (5, 6) sont formées de bandes de tôle soudées du type de la finition Tailored-Blanks.
